# EUROPEAN PATENT SPECIFICATION

(11) **EP 2 629 958 B1**
(45) Date of publication and mention of the grant of the patent: **10.12.2014**
(21) Application number: 11781633.0
(22) Date of filing: 13.10.2011
(51) Int. Cl.: B29C 51/26, B29C 51/42, B29C 51/06, B29C 51/08, B29C 51/10, B29C 51/40

(54) **FORMING APPARATUS**
FORMVORRICHTUNG
APPAREIL DE FORMAGE

(30) Priority: 18.10.2010 IT MO20100289
(43) Date of publication of application: 28.08.2013
(73) Proprietor: Sarong Societa' Per Azioni, 42046 Reggiolo (RE) (IT)
(72) Inventor: BARTOLI, Andrea, I-42123 Reggio Emilia (RE) (IT); TRALDI, Flavio, I-41030 San Prospero (MO) (IT)
(74) Representative: Crugnola, Pietro
(86) International application number: PCT/IB2011/054544
(87) International publication number: WO 2012/052892

(56) References cited:
- EP-A2- 1 719 604
- WO-A2-2010/031398
- US-A1- 2009 104 302
- US-B1- 6 250 909
- DATABASE WPI Week 200255 Thomson Scientific, London, GB; AN 2002-511721 XP002655582, -& JP 2002 067137 A (FUSE SHINKU KK) 5 mars 2002 (2002-03-05)
- DATABASE WPI Week 199650 Thomson Scientific, London, GB; AN 1996-501506 XP002655583, -& JP 8 258132 A (INOAC CORP KK) 8 octobre 1996 (1996-10-08)

## Description

The invention relates to a forming apparatus for making objects by forming a sheet of thermoformable material.

Such apparatuses are known from EP1719604, WO2010 031398, JP2002067137, JP 8258132, US6250909 and US 20090104302

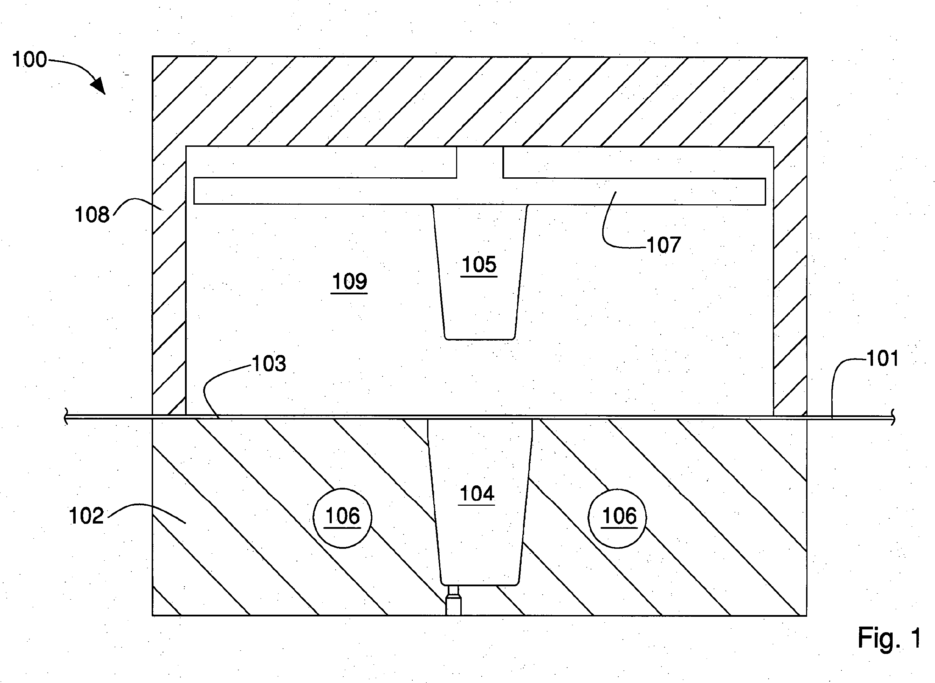

. With reference to Figure 1, there is disclosed an apparatus 100 of known type for forming objects from thermoformable sheet material 101.

The apparatus 100 comprises a die 102 provided with an upper face 103 on which the sheet material 101 rests. In the die 102 at least one cavity 104 is obtained that is configured for receiving, in a forming step, the sheet material 101 and has the shape that the object to be formed has to take.

The apparatus 100 further comprises a punch 105 cooperating with the cavity 104 to form the desired object. In the forming step, the punch 105 is movable towards the die 102 and engages with the cavity 104 such as to deform the previously heated sheet material 101 to a temperature that is such as to enable the previously heated sheet material 101 to be softened and deformed plastically.

The die 102 is provided with conduits 106 within which a cooling fluid flows that is suitable for cooling the die 102 rapidly and consequently the sheet material 101 deformed in the cavity 104, such as to give suitable stiffness features to the obtained object.

The punch 105 is fixed to an element 107, which is in turn supported by a bell 108 that bounds a closed work zone 109, in which the punch 105 is arranged and thus in which the formed object is obtained by compression forming.

One drawback of the aforesaid known compression forming apparatuses is that they do not enable good-quality containers to be formed.

This is due to the fact that during the forming operation the thermoformable sheet material remains in contact with the upper face of the die for a considerable period of time. As the die is cooled, the sheet can cool before the forming operation also at a portion thereof that faces the cavity of the die. Excessive cooling of the sheet can cause an alteration to the molecular structure and properties thereof and thus make the process of thermoforming the containers more difficult and/or cause a deterioration in the properties of the material and thus cause poor quality containers to be obtained.

Another drawback of known apparatuses lies in the fact that they do not enable elongated objects and objects with a reduced cross section to be made, i.e. objects with a very extended depth, with appropriate thicknesses of the walls, such as to give good mechanical and structural features such as stiffness and resistance.

This is due to the fact that the quantity of sheet material that is usable for obtaining an object is limited. In fact, the object is made by forming the portion of previously softened sheet material, which faces the cavity of the die. Thus, if the object to be formed is very deep, this portion of material gives rise to very thin walls, with reduced stiffness and resistance.

In order to overcome this drawback, it is necessary to increase the thickness of the sheet material in such a manner as to increase the quantity of material available for forming the object, this nevertheless involving a significant waste of material and thus high costs of production for producing the object.

Alternatively, it is necessary to use injection-moulding apparatuses, which are nevertheless more complex and expensive.

One object of the present invention is to improve apparatuses for forming objects from a sheet of thermoformable material. Another object is to obtain a forming apparatus that enables sheet cooling to be minimised or even avoided that is due to contact with elements of the apparatus before the forming operation.

A further object is to make a forming apparatus that enables objects to be formed that have any desired shape, in particular elongated objects or objects with a reduced cross section, i.e. objects which are long and narrow.

Still another object is to make a forming apparatus that enables objects to be obtained that have appropriate wall thicknesses and thus good mechanical structural features, in particular suitable stiffness and resistance.

A further object is to obtain an apparatus that is constructionally simple and enables the production costs of producing the objects to be reduced.

These objects and still others are all achieved by a forming apparatus made according to one or more of the claims set out below.

The invention can be better understood and implemented with reference to the attached drawings, which illustrate an embodiment thereof by away of non-limiting example, in which:
Figure 1 is a schematic cross section of a forming apparatus of known type;
Figure 2 is a schematic cross section of a forming apparatus according to the invention shown in a first operating configuration and, as a dotted line, in a second operating configuration, the section being made according to a section plane II-II that is visible in Figure 5;
Figure 3 is a schematic cross section of the apparatus in

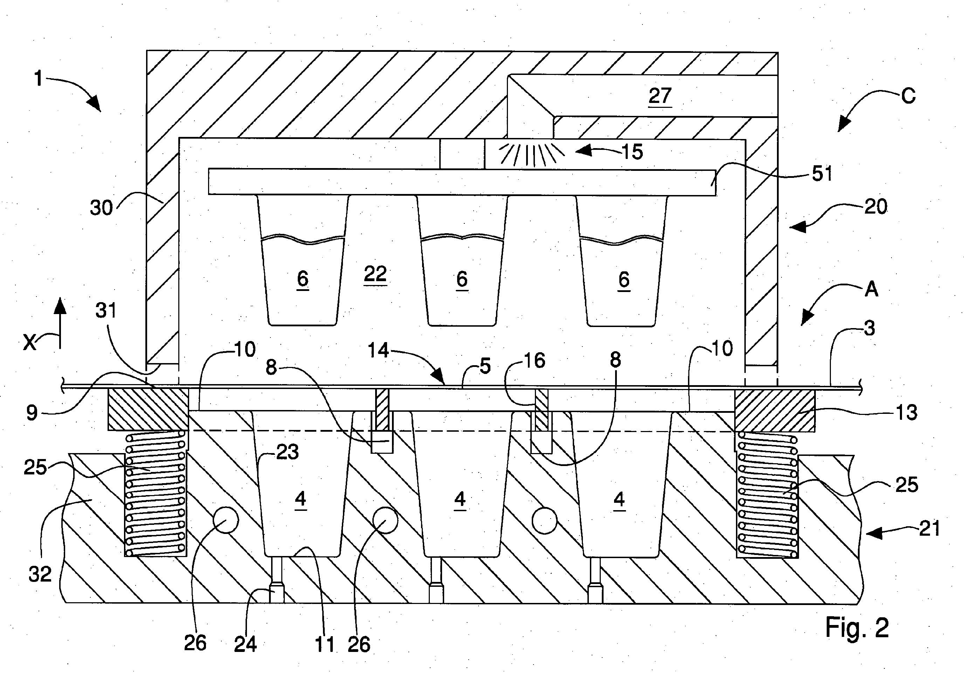

Figure 2 in another operating configuration;

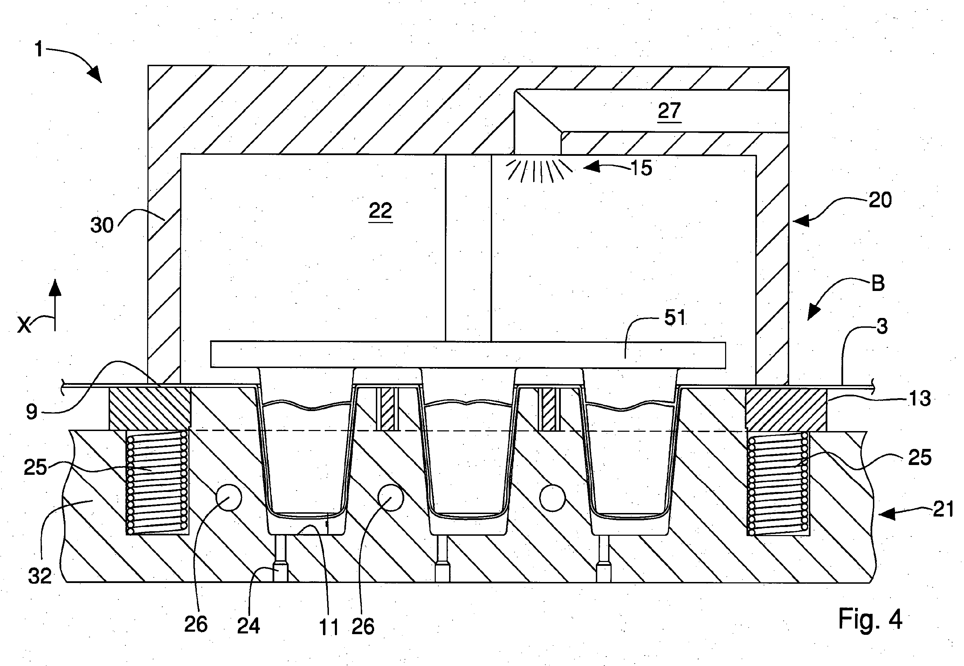

Figure 4 is a schematic cross section of the apparatus in
Figure 2 in a further operating configuration;

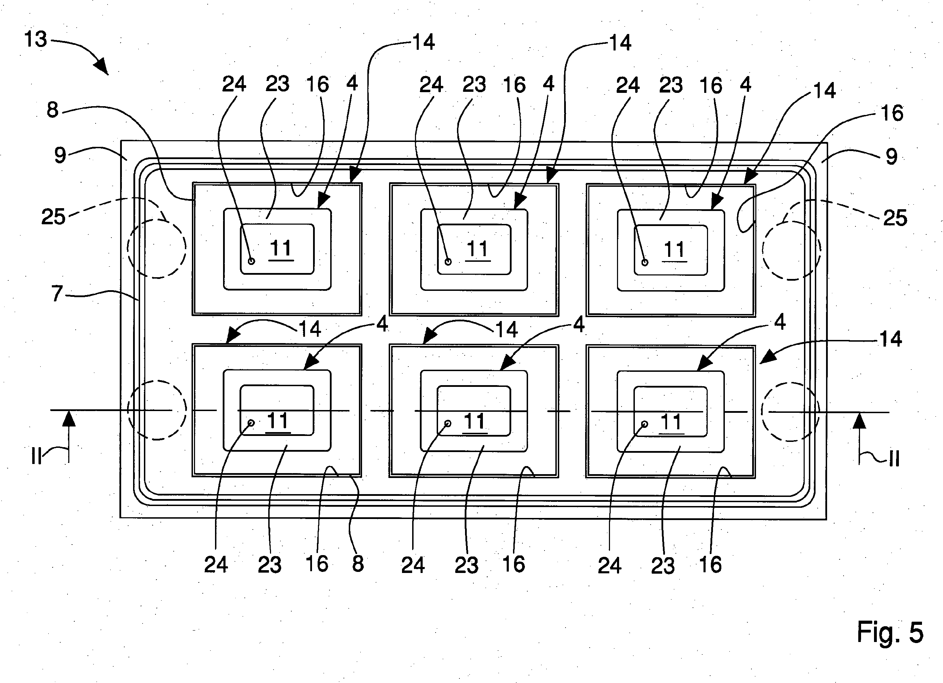

Figure 5 is a schematic plan view of supporting means and of second forming means of the apparatus in Figure 2.

With reference to Figures 2 to 4 there is shown a forming apparatus 1 that is suitable for forming an object from a sheet of thermoformable material.

The apparatus 1 can be associated with a forming machine, which is not shown, which is arranged for forming the objects from the sheet 3. In particular, this machine may comprise a plurality of work stations, including a forming station with which the apparatus 1 is associated and other stations before and after the forming station. For example, upstream of the forming station, a sheet heating station 3 can be provided to take the latter to high temperatures such as to enable the latter to be softened and deformed plastically in the subsequent forming station. Further, downstream of the forming station a blanking station can be provided where suitable cutting means separates the formed objects from the sheet 3 from which they have been obtained.

The apparatus 1 comprises first forming means 20 and second forming means 21, for example positioned respectively above and below the sheet 3.

The first forming means 20 comprises bell means 30, including a hollow body bounding a closed work zone 22, within which the objects forming operation occurs.

The second forming means 21 comprises a die 32 provided with one or more cavities 4 within which the aforesaid object is formed. In the embodiment illustrated in the figures, there are, for example, six cavities 4 arranged in two rows of three cavities each. Each cavity 4 can have a substantially frustoconical, or cylindrical, or prismatic shape.

The die 32 is provided with conduits 26 within which a cooling fluid flows that is suitable for rapidly cooling the die 32 and consequently the sheet 3 deformed within the cavities 4 such as to give appropriate stiffness features to the object that is being formed.

The die 32 comprises a substantially flat supporting surface 10, intended for supporting the sheet 3 and in which the cavities 4 are made. Each cavity comprises side walls 23 and a bottom wall 11 that are, for example, substantially parallel to the supporting surface 10. It should be noted that the bottom wall 11 of the cavity 4 is arranged for forming a base wall of the objects to be formed. On the bottom wall 11 an opening 24 is made that connects the cavity 4 to the external environment to enable the air therein to exit during forming.

The first forming means 20 is provided with operating means 6, 15 arranged for cooperating with the cavities 4 to form the objects. In particular, the operating means comprises punch means 6 that includes one or more punches 6 in a number that are equal to the number of cavities and are configured to engage in the respective cavities 4 in a shapingly coupled manner in order to deform the sheet 3. The punches 6 are connected stiffly together inasmuch as they are supported by a single supporting plate 51 and are movable in relation to the die 32.

The apparatus may also comprise a single cavity 4 with respective punch 6, or any number of cavities and punches different from one another or from six, the operation of the apparatus 1, as disclosed in detail below, being substantially the same.

The operating means 6, 15 may comprise, alternatively or in addition, a pressurised fluid 15, for example hot air, introduced inside the bell means 30, in the work zone 22, by a channel 27.

The apparatus 1 comprises supporting means 13, which is slidably connected to the second forming means 21 and is interposed between the latter and the first forming means 20. The supporting means 13 is further movable between a first external position A, in which it supports the sheet 3 by maintaining the sheet spaced away from the first forming means 20, and a second internal position B, in which the supporting means 13 arranges the sheet 3 on the supporting surface 10 of the second forming means 21 so that it can be formed. The supporting means 13 is movable slidably along a direction X that is substantially orthogonal to the supporting surface 10.

The supporting means 13 comprises a plate that is shaped substantially as a grid as it is provided with a plurality of openings 14, each opening 14 being arranged at a respective cavity 4 of the die 32 to enable the operating means 6, 15, in particular the punch 6, to pass. For this purpose, each opening 14 is positioned above the respective cavity 4 and has, in a plan view, overall dimensions that are greater than the latter.

The opening 14 is bounded by side walls 16 arranged in such a manner as to be rectangle-shaped.

In other embodiments that are not shown, the opening 14 can have any polygonal shape or a circular shape.

The second forming means 21 comprises seat means 8 made in the die 32 and arranged for housing and containing the supporting means 13 in the second position B, as will be explained better below with reference to the operation of the apparatus 1. In particular, the seat means 8 is made on the supporting surface 10 and comprises a plurality of grooves that are suitable for housing the supporting means 13. The latter comprises a peripheral portion 9 arranged for abutting on a further peripheral portion 31 of the bell body 30. The peripheral portion 9 is provided with arresting means 7, comprising, for example, knurling or the like, that cooperates with the further peripheral portion 31 to immobilise and retain the sheet 3, in particular during forming.

The apparatus 1 comprises elastic means 25, in particular coil springs, interposed between the second forming means 21 and the supporting means 13. In the embodiment shown, the elastic means 25 comprises four springs, arranged two by two on opposite sides of the second forming means 21 and contained partially in respective housings made in the die 32.

In other embodiments that are not shown the elastic means 25 may comprise any number of springs other than four, for example two.

In further embodiments of the apparatus that are not shown, the supporting means 13 is slidably connected to the die 32 and driven between the first position A and the second position B and vice versa by actuating means, for example pneumatic cylinders.

The supporting means 13 is thus interposed, in use, between the first forming means 20 and the second forming means 21, i.e. between the bell means 30 and the die 32. In this manner, the supporting means 13 enables a portion 5 to be formed of the sheet 3 to be maintained suspended in the work zone 22. Thus in the interval of time that elapses between positioning the portion 5 in the forming apparatus with the forming means 20, 21 arranged in a first open operating configuration C (Figure 2) and the start of forming, the aforesaid portion 5 is not in contact with the supporting surface 10 of the die 32, which does not therefore remove heat from the sheet 3. In this manner, the portion 5 is not cooled, which would at least partially neutralise the heating of the sheet 3 performed previously (in the heating station).

In the first open operating configuration C, the first forming means 20 is spaced away from the second forming means 21 in such a manner that the sheet 3 is advanced, optionally in an intermittent manner. The sheet 3 is advanced by suitable grasping means of known type, for example, grippers, above the supporting means 13, which is in turn arranged above the die 32 in the first external position A.

Once the sheet 3 is positioned correctly inside the apparatus 1, the bell means 30 is moved towards the die 32 of the second forming means 21 (along the direction X) in such a manner as to press and immobilise the sheet 3 between the peripheral portion 9 of the supporting means 13 and the further peripheral portion 31 of the bell means 30. In particular, the arresting means 7 of the peripheral portion 9 slightly deforms the heated sheet 3, enabling the heated sheet 3 to be effectively and firmly immobilised, preventing the heated sheet 3 from moving. The second forming means 21 and the bell means 30 are movable in relation to one another, for example the bell means 30 is fixed and the second forming means 21 is movable along the direction X.

During the movement of the second forming means 21, the bell means 30 abuts on and moves the supporting means 13 between the first position A and the second position B. In particular, the bell means 30 pushes the supporting means 13 inside the seat means 8, simultaneously compressing the elastic means 25. The force of reaction exerted by the latter enables the supporting means 13 to be pushed against the bell means 30 and the sheet 3 to be thus immobilised.

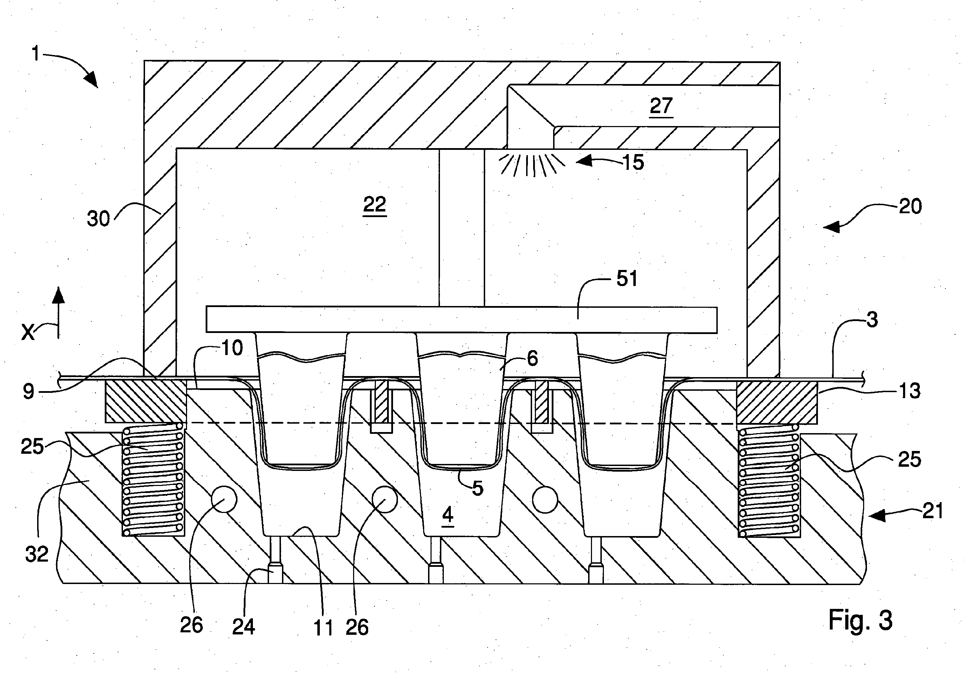

During the movement of the supporting means 13, the operating means 6, 15 (in particular the punches 6) can be moved to contact and start to form plastically the portion 5 of the sheet 3 (Figure 3).

When the supporting means 13 is arranged in the second position B, with the sheet 3 appropriately arranged and spread on the supporting surface 10, the punches 6 enter inside the respective cavities 4 to complete forming (Figure 4).

It should be noted that the contact of the punches 6 with the sheet 3 can also occur when the supporting means 13 is in the second position B.

During movement of the punches 6, delivery of the pressurised fluid 15 inside the work zone 22 can also be activated to assist the punch 6 in the forming process. In particular, the optionally heated pressurised fluid 15 cooperates with the punches 6 to make the portion 5 of the sheet 3 adhere better to the side walls 23 and to the bottom walls 11 of the cavities 4.

Once the punches 6 have formed the objects, the latter are cooled rapidly by the fluid flowing in the conduits 26-which gives the formed object appropriate stiffness features - whilst the punches 6 are lifted and disengaged from cavity 4 and sheet 3. It is thus possible to move the second forming means 21 away from the first forming means 20 in the direction X, in the opposite way, to extract the formed objects from the cavities 4 and to enable the sheet 3 to advance and exit the apparatus 1, such that an operator or a removing device can remove the sheet 3 on which the object has been formed. Once the first forming means 20 and the second forming means 21 are spaced apart from one another, the supporting means 13 is returned by the elastic means 25 to the first position A.

The apparatus 1 of the invention enables objects to be obtained that have desired shape features and at the same time good mechanical and structural properties. In fact, the apparatus 1 enables objects to be obtained that extend greatly in depth, i.e. in particular, long and straight objects. This is due to the presence of the supporting means 13 provided with the openings 14 that enables a more quantity of appropriately softened sheet material to be available, to obtain the object. In other words, each object 2 is formed from the portion 5 of the sheet 3 that is bounded by the respective opening 14. Thus, if the object to be performed is very deep, it is sufficient to provide an opening 14 of appropriate dimensions. It should further be noted that the presence of the opening 14 enables the portion 5 to be maintained at a high temperature, i.e. substantially at the softening temperature reached in a previous heating station. On the other hand, in known apparatuses - devoid of such openings - the supporting surface 10 removes heat from the sheet 3 and thus the material is less deformable and compression forming is more complex and tricky to achieve.

Further, the thickness of the object that is thus obtained is uniform and the object may have an almost homogenous molecular structure. It should be further noted that the apparatus 1 also enables a smaller quantity of thermoformable material to be consumed from which the sheet 3 is made with respect to the prior art for the same number of objects obtained. In fact, owing to the presence of the suitably sized opening 14, the thickness of the sheet 3 can be significantly less than the thicknesses of the sheets that are normally used in known apparatuses, in particular the thickness of the sheet 3 can be 1/3 of the thickness of the sheets of material that are used in known compression forming apparatuses. Thus, the apparatus 1 is cheap, inasmuch as it enables the production costs of producing the objects to be reduced, limiting the cost of the thermoformable material. Also, it should be noted how the apparatus 1 of the invention is constructionally and functionally simple.

In one version that is not shown the apparatus may comprise the punches and be devoid of the pressurised fluid and thus of the channel means.

In another version, which is not shown, the apparatus may comprise only the pressurised fluid as an operating means to form objects from sheet material, and thus be devoid of the punch.

## Claims

1. Apparatus for making objects by forming a sheet (3) of thermoformable material, comprising first forming means (20) provided with operating means (6, 15) and second forming means (21) provided with a supporting surface (10) and cavity means (4), said operating means (6, 15) and said cavity means (4) cooperating for forming said objects from said sheet (3), wherein the apparatus comprises supporting means (13) interposed between said first forming means (20) and said second forming means (21) and movable between a first position (A) in which said supporting means (13) supports said sheet (3), maintaining said sheet (3) spaced away at least from said first forming means (20) and said supporting surface (10) of said second forming means (21), such that no heat is removed from the sheet (3), and a second position (B), in which said supporting means (13) arranges said sheet (3) on the supporting surface (10) of said second forming means (21) to be successively deformed, the apparatus being **characterized in that** said supporting means (13) comprises a plate provided with at least an opening (14) at said cavity means (4) to allow the passage of said operating means (6, 15), wherein said plate is shaped as a grid and provided with a plurality of openings (14) at respective cavity of said cavity means (4).

2. Apparatus according to claim 1, wherein said supporting means (13) is slidably connected to said second forming means (21).

3. Apparatus according to claim 1 or 2, wherein said second forming means (21) comprises seat means (8) arranged for housing and containing said supporting means (13) in said second position (B).

4. Apparatus according to any preceding claim, wherein said first forming means (20) comprises bell means (30) arranged for abutting on and blocking said sheet (3) against said supporting means (13) such as to bound a work zone (22) in which it acts on said operating means (6, 15).

5. Apparatus according to claim 4, wherein said supporting means (13) is abutted on and moved by said bell means (30) between said first position (A) and said second position (B).

6. Apparatus according to claim 4 or 5, wherein said second forming means (21) and said bell means (30) are movable in relation to one another.

7. Apparatus according to any one of claims 4 to 6, wherein said supporting means (13) comprises a peripheral portion (9) arranged for abutting on a further peripheral portion (31) of said bell means (30) and provided with arresting means (7) cooperating with said further peripheral portion (31) to block and retain said sheet (3) in particular during forming.

8. Apparatus according to any preceding claim, comprising elastic means (25) interposed between said second forming means (21) and said supporting means (13), and arranged for moving said supporting means (13) from said second position (B) to said first position (A).

9. Apparatus according to any preceding claim, wherein said operating means comprises punch means (6) and/or pressurised fluid (15).

10. Apparatus according to any preceding claim, wherein said second forming means (21) comprises die means (32) provided with said supporting surface (10) intended for supporting said sheet (3) and in which said cavity means (4) is made.

11. Apparatus according to claim 10, as appended to claim 3, wherein said seat means (8) is made on said supporting surface (10).

## Patentansprüche

1. Apparatur zur Herstellung von Objekten durch Formen einer Platte (3) aus thermoformbarem Material, die ein erstes Formmittel (20), das mit einem Arbeitsmittel (6, 15) versehen ist, und ein zweites Formmittel (21), das mit einer Tragfläche (10) versehen ist, und ein Kavitätsmittel (4) aufweist, wobei das Arbeitsmittel (6, 15) und das Kavitätsmittel (4) kooperieren, um die Objekte aus der Platte (3) zu formen, wobei die Apparatur ein Tragmittel (13) aufweist, das zwischen dem ersten Formmittel (20) und dem zweiten Formmittel (21) eingefügt ist, und bewegbar ist zwischen einer ersten Position (A), in der das Tragmittel (13) die Platte (3) trägt, die Platte (3) zumindest von dem ersten Formmittel (20) und der Tragfläche (10) des zweiten Formmittels (21) räumlich beabstandet hält, so dass keine Wärme von der Platte (3) abgeführt wird, und einer zweiten Position (B), in der das Tragmittel (13) die Platte (3) auf der Tragfläche (10) des zweiten Formmittels (21) zur sukzessiven Verformung anordnet, wobei die Apparatur **dadurch gekennzeichnet ist, dass** das Tragmittel (13) eine Platte aufweist, die mit zumindest einer Öffnung (14) an dem Kavitätsmittel (4) versehen ist, um das Hindurchtreten des Arbeitsmittels (6, 15) zu ermöglichen, wobei die Platte als ein Gitter geformt und mit einer Vielzahl von Öffnungen (14) an der jeweiligen Kavität des Kavitätsmittels (4) versehen ist.

2. Apparatur gemäß Anspruch 1, wobei das Tragmittel (13) gleitend mit dem zweiten Formmittel (21) verbunden ist.

3. Apparatur gemäß Anspruch 1 oder 2, wobei das zweite Formmittel (21) ein Aufnahmemittel (8) aufweist, das eingerichtet ist, um das Tragmittel (13) in der zweiten Position (B) aufzunehmen und zu fassen.

4. Apparatur gemäß einem der vorherigen Ansprüche, wobei das erste Formmittel (20) ein Glockenmittel (30) aufweist, das eingerichtet ist, um an der Platte (3) anzuliegen und Letztere gegen das Tragmittel (13) zu blockieren, so dass eine Arbeitszone (22) begrenzt wird, in der es auf das Arbeitsmittel (6, 15) einwirkt.

5. Apparatur gemäß Anspruch 4, wobei das Tragmittel (13) an dem Glockenmittel (30) anliegt und von Letzterem zwischen der ersten Position (A) und der zweiten Position (B) bewegt wird.

6. Apparatur gemäß Anspruch 4 oder 5, wobei das zweite Formmittel (21) und das Glockenmittel (30) gegeneinander beweglich sind.

7. Apparatur gemäß einem der Ansprüche 4 bis 6, wobei das Tragmittel (13) ein Umfangsteil (9) aufweist, das eingerichtet ist, um an einem weiteren Umfangsteil (31) des Glockenmittels (30) anzuliegen, und mit einem Rastmittel (7) versehen ist, das mit dem weiteren Umfangsteil (31) kooperiert, um die Platte (3) insbesondere während des Formens zu blockieren und zurückzuhalten.

8. Apparatur gemäß einem der vorherigen Ansprüche, die ein elastisches Mittel (25) aufweist, das zwischen dem zweiten Formmittel (21) und dem Tragmittel (13) eingefügt ist und eingerichtet ist, um das Tragmittel (13) von der zweiten Position (B) zu der ersten Position (A) zu bewegen.

9. Apparatur gemäß einem der vorherigen Ansprüche, wobei das Arbeitsmittel ein Stempelmittel (6) und/oder druckbeaufschlagte Flüssigkeit (15) aufweist.

10. Apparatur gemäß einem der vorherigen Ansprüche, wobei das zweite Formmittel (21) ein Matrizenmittel (32) aufweist, das mit der Tragfläche (10) versehen ist, die vorgesehen ist, um die Platte (3) zu tragen, und in der das Kavitätsmittel (4) vorgesehen ist.

11. Apparatur gemäß Anspruch 10, sofern auf Anspruch 3 rückbezogen, wobei das Aufnahmemittel (8) auf der Tragfläche (10) vorgesehen ist.

## Revendications

1. Appareil pour la fabrication d'objets par mise en forme d'une feuille (3) en une matière thermoformable, comprenant des premiers moyens de mise en forme (20) équipés de moyens d'actionnement (6, 15) et des deuxièmes moyens de mise en forme (21) équipés d'une surface de support (10) et de moyens de type cavité (4), lesdits moyens d'actionnement (6, 15) et lesdits moyens de type cavité (4) coopérant pour former lesdits objets à partir de ladite feuille (3), l'appareil comprenant des moyens de support (13) interposés entre lesdits premiers moyens de mise en forme (20) et lesdits deuxièmes moyens de mise en forme (21) et mobiles entre une première position (A), dans laquelle lesdits moyens de support (13) supportent ladite feuille (3) en maintenant ladite feuille (3) espacée au moins par rapport audits premiers moyens de mise en forme (20) et à ladite surface de support (10) desdits deuxièmes moyens de mise en forme (21) d'une manière telle qu'aucune chaleur n'est évacuée de la feuille (3), et une deuxième position (B), dans laquelle lesdits moyens de support (13) disposent ladite feuille (3) sur la surface de support (10) desdits deuxièmes moyens de mise en forme (21) pour qu'elle soit successivement déformée, l'appareil étant **caractérisé en ce que** lesdits moyens de support (13) comprennent une plaque équipée d'au moins une ouverture (14) au niveau desdits moyens de type cavité (4) pour permettre le passage desdits moyens d'actionnement (6, 15), ladite plaque étant formée en tant que grille et équipée d'une pluralité d'ouvertures (14) au niveau de la cavité respective desdits moyens de type cavité (4).

2. Appareil selon la revendication 1, dans lequel lesdits moyens de support (13) sont reliés de manière coulissante auxdits deuxièmes moyens de mise en forme (21).

3. Appareil selon la revendication 1 ou 2, dans lequel lesdits deuxièmes moyens de mise en forme (21) comprennent des moyens de type siège (8) organisés pour loger et contenir lesdits moyens de support (13) dans ladite deuxième position (B).

4. Appareil selon une quelconque revendication précédente, dans lequel lesdits premiers moyens de mise en forme (20) comprennent des moyens de type cloche (30) organisés pour venir en butée sur ladite feuille (3) et la bloquer contre lesdits moyens de support (13) de manière à délimiter une zone de travail (22) dans laquelle ils agissent sur lesdits moyens d'actionnement (6, 15).

5. Appareil selon la revendication 4, dans lequel lesdits moyens de support (13) sont en butée sur, et déplacés par, lesdits moyens de type cloche (30) entre ladite première position (A) et ladite deuxième position (B).

6. Appareil selon la revendication 4 ou 5, dans lequel lesdits deuxièmes moyens de mise en forme (21) et lesdits moyens de type cloche (30) sont mobiles les uns par rapport aux autres.

7. Appareil selon l'une quelconque des revendications 4 à 6, dans lequel lesdits moyens de support (13) comprennent une partie périphérique (9) organisée pour venir en butée sur une autre partie périphérique (31) desdits moyens de type cloche (30) et équipée de moyens d'immobilisation (7) coopérant avec ladite autre partie périphérique (31) pour bloquer et retenir ladite feuille (3) notamment pendant la mise en forme.

8. Appareil selon une quelconque revendication précédente, comprenant des moyens élastiques (25) interposés entre lesdits deuxièmes moyens de mise en forme (21) et lesdits moyens de support (13), et organisés pour déplacer lesdits moyens de support (13) de ladite deuxième position (B) vers ladite première position (A).

9. Appareil selon une quelconque revendication précédente, dans lequel lesdits moyens d'actionnement comprennent des moyens de poinçonnage (6) et/ou un fluide sous pression (15).

10. Appareil selon une quelconque revendication précédente, dans lequel lesdits deuxièmes moyens de mise en forme (21) comprennent des moyens de type matrice (32) équipés de ladite surface de support (10) destinée à supporter ladite feuille (3) et dans laquelle lesdits moyens de type cavité (4) sont réalisés.

11. Appareil selon la revendication 10, dans la mesure où elle dépend de la revendication 3, dans lequel lesdits moyens de type siège (8) sont réalisés sur ladite surface de support (10).
